# EUROPEAN PATENT APPLICATION

(11) **EP 1 041 846 A1**
(43) Date of publication of application: **04.10.2000**
(21) Application number: 99106725.7
(22) Date of filing: 01.04.1999
(51) Int. Cl.: H04Q 7/38

(54) **Mobile station and mobile communication system**

(71) Applicant: ROBERT BOSCH GMBH, 70442 Stuttgart (DE)
(72) Inventor: Bisgaard, Peter, DK-Aabybro (DK)

(57) **Abstract**

The invention relates to a Mobile station (5) and a Communication system with a Mobile station (5) for the exchange of information with base stations (1, 2). Each base station (1, 2) covers a limited geographical area (3, 4) and the mobile station (5) is capable to change a connection from a first base station (1) to a second base station (2). The mobile station (5) comprises means for a user of the mobile station (5) to determine a least first group (1) and the second group (2) of base stations and the mobile station (5) can only connect to the first group (1) and can not connect to the second group (2) of base stations.

## Description

### State of the art

The invention relates to a mobile station or a mobile communication system with the generic features of the independent patent claims. There are already mobile communication systems used, that comprise base stations and mobile stations. An example for such a mobile communication system is the GSM System, which is used all over Europe. The GSM System comprises base stations, wherein each base station covers a limited geographical area. When the mobile station moves out of a geographical area of a first base station the connection to the base station is terminated and a new connection to another base station is established. This process is called handover. In the GSM-System the handover procedure is initiated by the network, which means that the user of a mobile station has no control of which base stations he is connected to.

### Advantages of the invention

The mobile station and the communication system according to the features of the independent patent claims has the advantage that a user can determine which base stations are used for the connection of the mobile with the communication system. This allows the user to select a specific cost and service profile.

Further advantages arise from the features of the dependent patent claims. The invention is especially useful if the two groups of base stations belong to different network operators. To inform the network about the selection of the user, the mobile station sends a message to the base station. This is especially useful if the base station has a possibility to command the mobile station to connect to another base station. Furthermore it is useful that the mobile station monitors only the signal strengths of base stations that are possible candidates for a connection thereto.

### Drawings

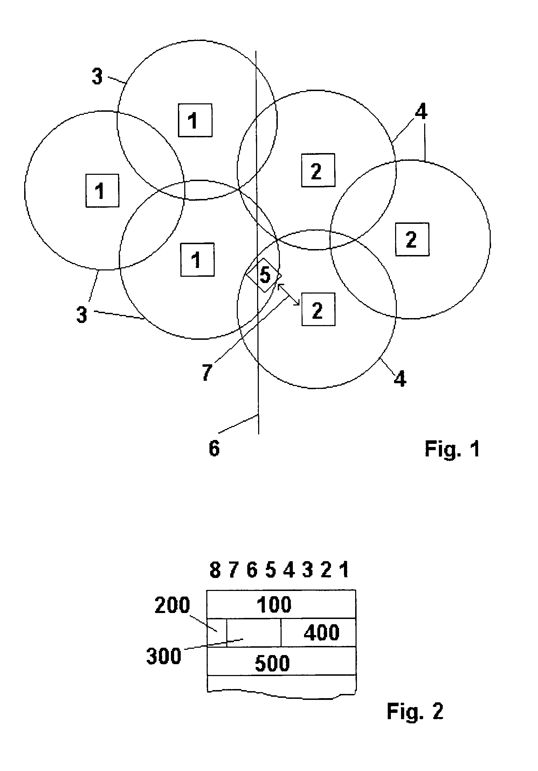

Embodiments of the invention are shown in the drawings and described in details in the description. Figure 1 shows a communication system with base stations and a mobile station and figure 2 shows the data format of a message from the mobile station to the base station.

### Description

Figure 1 shows a mobile communication system comprising a first group of base stations 1, a second group of base stations 2 and the mobile station 5. Each of the base stations 1, 2 covers a limited geographical area that is indicated by the circles 3, 4, that are surrounding the base stations 1, 2. In real life the covered area is not necessary a circle. Within these areas 3, 4, the mobile station 5 can establish a wireless connection as shown by the arrow 7. The arrow 7 indicates that the mobile station 5 is connected to a base station 2 so that the mobile station 5 and the base station 2 can exchange information, especially telephone calls or data transmissions.

If the mobile station 5 moves, it will eventually leave the geographical area covered by a specific base station and there are then some mechanism to terminate the connection of the mobile station 5 to the old base station and establish a new connection to a new base station. This process is called handover. A plurality of base stations work together in the form of a network so that the user does normally not realize that his connection has been handed over from one base station to another base station. If the user has an ongoing telephone call the connection will also be transferred from the old base station to the new base station, so that the user does not realize the handover.

As an example figure 1 shows a situation with two different groups of base stations 1, 2 form two different networks, because they are separated by a political border 6. Since each country has his own national telecommunication institute that allocates the use of radio frequencies, this is a typical situation where base stations of a different network operators are in close proximity to each other. When the user travels with his mobile station 5 along the political borders 6 there might arise the situation that the connection to a base station of a group 1 is much better than to the base stations of a group 2. Although the connection is much better the user might not want his mobile station 5 to be handed over from the group 2 to the group 1, for example if the service charge of the network of the base stations of group 1 is much higher than the service charge of the base stations of group 2. The invention therefore suggests that the user can determine to which group of base stations 1, 2 the mobile station 5 can connect to.

There are different methods for how the user can determine to which base stations his mobile station can connect to. A first method comprises an extra mode in the mobile station so that the user can select different groups of base stations he wants his mobile stations 5 to establish connections with. Normally, selecting a group of base stations is equivalent to selecting a network operator. This is today the case with a GSM-System. In future applications for example the UMTS-System it might also be possible that a network operator has a base station with different services and the user might select that his mobile station should only be able to communicate with a specific type of base station.
Figure 2 shows a possible data format of the information to which groups of base stations a mobile station can connect to. Above the data are the numbers 8 to 1 indicating the bits of the data. The number 8 stands for the most significant bit and 1 for the least significant bit. A first data field 100 comprises 8 bits and contains information about the length of the total data. The most significant bit (bit 8) of the second byte is a bit which is set to one if the user wants to allow connections to different groups of base stations. If the bit is set to 0, the user does not allow the mobile station to connect to different groups of base stations. The next data field 300 comprises three bits indicating what type of restriction related to the connection to different groups of base stations should be used. If these three bits are set at 0 then there are no restrictions. If the data field 200 comprises a one and data field 300 comprises only 0's then the network is free to hand the mobile station over to any base station which can establish a connection. By setting different bits of the data field 300 different type of restrictions can be signalled. The data fields 400 and 500 comprise further information related to a restricted access to network operators, for example code numbers indicating to which operators the mobile stations can connect. If the handover from one group of base stations to another group of base stations is initiated by the base stations then the information field as shown in figure 2 should be communicated from the mobile station 5 to the base station to which the mobile station 5 is currently connected.

The invention relates to a protocol for enabling and disabling handover between mobile networks (also called seamless roaming). This is described with reference to the GSM system, but the idea is applicable in other types of cellular telecommunication systems such as UMTS as well.

An essential feature in the cellular mobile telephony systems of today is the ability to transfer a call from one basestation to another one. The mobile station is connected to one or more base stations through a radio connection, and the call is then transferred from one base station to another, or from one set of base stations to another. This technique is called handover, and it is described in detail in GSM 04.08, section 3.4.4 (ETS 300 557) and GSM 05.08 (ETS 300 578).

In the GSM system, the handover procedure is completely controlled by the network. The base station, which the mobile is connected to, provides the mobile with a list of radio frequencies. The mobile station must then search for and monitor all these frequencies. During a call the mobile station continuously reports the received signal strength for the best frequencies to the network, which can then evaluate whether any of the reported base stations would be better than the one currently used. The process of making measurements of other base stations is called neighbor station monitoring and the reporting of the neighbor base stations to the network is called measurement reporting.

In case a better base station is found, the network commands the mobile to change to the new base station. It is said that the mobile is handed over to the new and better base station. In this manner it is possible to maintain a conversation while moving around, and it is a very essential feature in mobile communication systems. It is also technically possible to let the mobile decide when to make handovers, even though the current GSM system only supports network controlled handover.

The current GSM specifications state two methods for selecting the network on which the mobile can obtain service: An automatic mode and a manual mode (see GSM 02.11 (ETS 300 507) and GSM 03.22 (ETS 300 535). In the automatic selection mode, the mobile station chooses the network automatically without any kind of interference from the user. Different methods can be used for giving higher priority to some networks, e.g., the last used network can be given a higher priority, or the network with the best received signal strength can be given a higher priority. In the manual selection mode, the user himself specifies which network the mobile station should enter service on. The mobile makes a search for the networks currently available and presents this list of networks for the user, who can then choose one. The mobile must then attempt to enter service on the chosen network, and the mobile is not allowed to make attempts for entering service on other networks than the chosen one.

Other types of manual selection mode is possible, for instance it is possible to implement a manual mode where the country is selected manually. The mobile station must then only enter service on networks belonging to the selected country. Another possibility would be to let the user make a list of the networks he wanted to use. The mobile station would then only be allowed to enter service on networks in this list.

It is today very common for the network operators to make agreements such that a subscriber from one network can enter service on another network and still be able to make and receive calls. When a subscriber enters service on another network than the one he subscribes to, it is said that he is roaming on the other network, and the agreements between networks that makes this possible are called roaming agreements.

In the current GSM standards, it is only specified how handovers between base stations belonging to one network operator is working. It is not stated how to make handover between two network operators. In 1998, the network operator Telia in Denmark has started experiments with handovers between network operators. In this case, the call is transferred from a base station of one network operator to be continued on a base station of another network operator. This is called seamless roaming. The reason that this is smart is that in case a mobile moves out of coverage from one network and into the coverage area of another network, the call will be dropped without the seamless handover feature even if the networks has roaming agreements. In this case the user will have to establish his call again to continue it. With seamless roaming, the user simply continues his conversation as if nothing had happened.

There is - for the user - one big drawback of the seamless roaming feature: Both making and receiving calls can be considerably more expensive in roaming situations. Depending on the exact subscription options, the price of the call could be considerably more expensive after the seamless roaming handover has been carried out. This means that the user is not always interested in using the seamless roaming feature, especially if he isn't moving into the other country, but only moving around in a border area. Another argument is that when the manual network selection mode is used, it is very illogical that the mobile is handed over to another network, as he specifically has requested to use one network and not others. There is currently no mechanism in the GSM standards to prohibit that the network commands the mobile to make handover to another network, and as the handover feature is essential and mandatory, the mobile must carry out the handover procedure.

The invention provides a method for communicating the information from the mobile station to the network whether the seamless roaming feature is switched on or off. The network can then take this information into consideration when deciding when to make handovers and to which base stations the mobile station can be handed over. The seamless roaming feature can then be an option in the mobile station's man machine interface which can be switched on or off. Furthermore, the mobile station could be implemented such that in case some kind of manual selection mode is chosen, the feature can be implemented such that seamless roaming is only accepted to the networks that is manually chosen.

This invention is a possible addition to the solution for seamless roaming which Telia has made experiments with in Denmark. The solution implemented by Telia works completely independent of the mobile station, whereas this invention affects both the mobile station and the network.

This invention makes it possible to switch seamless roaming on or off, and it thereby makes mobile terminals more user friendly. It will also prohibit a lot of protests from the users to the networks when the users gets phone bills that are too high.

In all types of digital cellular systems, a call is established and maintained by exchanging a number of messages between the mobile station and the network. Each of these messages has a specific purpose, e.g., the mobile station can tell the network which number it is calling, or acknowledge that ciphering has been switched on. Typically, a mobile station will, in the beginning of a call setup, tell the network something about itself, e.g., how much power it is capable of sending with, which frequency bands it supports and so on.

For the network to be able to avoid seamless roaming, the information of whether the mobile accepts handovers to different networks must be exchanged as early as possible in the call setup, as the handover otherwise might occur before the information has been transferred. The mobile station must have a store internally, where the current value of the seamless roaming option is stored. The contents of this memory must then be transferred from the mobile station to the network during the call setup. It can either be communicated using a special message containing only this information, or as a part of another message.

Two methods are provided for setting up whether seamless handover is possible or not.

Whenever a manual network selection mode of some type is chosen, the mobile could automatically switch off seamless roaming by modifying the store containing the seamless roaming setting.
The seamless roaming feature can be switched on or off by a separate menu item. The user can enter this menu by using the mobile station's man machine interface and select, e.g., seamless roaming on or seamless roaming off. The mobile station must modify the contents of the store containing the seamless roaming setting.

When this store is communicated to the network in the call setup, the mobile terminal must only be commanded to perform handover to a network which is one of the manually chosen ones. The network must command the mobile station to perform neighbor station monitoring only on frequencies which matches the current setting of the seamless roaming feature.

It is also possible to use this invention during a call. The mobile station could allow the user to change the seamless roaming setting during the call. The mobile station must then again modify the local store according to the users wish, and send a message to the network indicating that the setting has been changed. The network must then act by adding or removing base stations from the list of frequencies to monitor, and send the new list to the mobile station.

In figure 1 a possible handover situation between two networks in the GSM system is illustrated. The mobile has a call running, and is connected to a base station. If the seamless roaming feature is to work, the mobile station must be commanded to measure and report also on the frequencies of the base stations in groupl, apart from the usual measuring on the base stations in group 2. In case a base station in group 1 is better in terms of the received signal strength than the base station the mobile is connected to, the mobile is commanded to handover to a base station in group 1. Some interaction between the two networks is also required.

## Claims

1. Mobile station (5) for the exchange of information with base stations (1, 2) each base station (1, 2) covering a limited geographical area (3, 4), wherein the mobile station (5) is capable to change a connection from a first base station (1) to a second base station (2), characterized in, that the mobile station (5) comprises means for a user of the mobile station (5) to determine a least first group (1) and the second group (2) of base stations, and that the mobile station (5) can only connect to the first group (1) and can not connect to the second group (2) of base stations.

2. Mobile station according to claim 1, characterized in, that the first group of a mobile station (1) are part of a first mobile network and that the second group of base stations (2) are part of a second mobile network.

3. Mobile station according to one of the preceding claims, characterized in, that the mobile station (5) changes a connection from a first base station to a second base station if it receives a command from the first base station and that the mobile station (5) sends a message to the first base station comprising information about the first and second group of base stations (1, 2).

4. Mobile station to any of the proceeding claims, characterized in, that the first group of base stations are located in the first country and that a second group of mobile stations are located in a second country.

5. Communication system with a Mobile station (5) for the exchange of information with base stations (1, 2), each base station (1, 2) covering a limited geographical area (3, 4), wherein the mobile station (5) is capable to change a connection from a first base station (1) to a second base station (2), characterized in, that the mobile station (5) comprises means for a user of the mobile station (5) to determine a least first group (1) and the second group (2) of base stations, and that the mobile station (5) can only connect to the first group (1) and can not connect to the second group (2) of base stations.

6. Communication system according to claim 5, characterized in, that the first group of a mobile station (1) are part of a first mobile network and that the second group of base stations (2) are part of a second mobile network.

7. Communication system according to one of the preceding claims, characterized in, that the mobile station (5) changes a connection from a first base station to a second base station if it receives a command from the first base station and that the mobile station (5) sends a message to the first base station comprising information about the first and second group of base stations (1, 2).

8. Communication system according to one of the preceding claims, characterized in, that the first group of base stations are located in the first country and that a second group of mobile stations are located in a second country.
